# FASCICULE DE BREVET EUROPEEN

(11) **EP 2 414 242 B1**
(45) Date de publication et mention de la délivrance du brevet: **08.05.2013**
(21) Numéro de dépôt: 10715987.3
(22) Date de dépôt: 26.03.2010
(51) Int. Cl.: B64G 5/00, B64G 1/40

(54) **DISPOSITIF D'AVITAILLEMENT DE PROPULSEURS D'UN LANCEUR**
BETANKUNGSVORRICHTUNG FÜR TRÄGERRAKETENANTRIEB
FUELLING DEVICE FOR PROPULSION OF A LAUNCHER

(30) Priorité: 30.03.2009 FR 0951958
(43) Date de publication de la demande: 08.02.2012
(73) Titulaire: Snecma, 75015 Paris (FR)
(72) Inventeur: BOUTET, Eric, F-27950 Saint Marcel (FR); PATTYN, Jean-Luc, F-27600 Gaillon (FR); MEYER, Francis, F-27940 Venables (FR)
(74) Mandataire: Cardy, Sophie Marie
(86) Numéro de dépôt international: PCT/FR2010/050557
(87) Numéro de publication internationale: WO 2010/112736

(56) Documents cités:
- EP-A- 0 117 702
- EP-A- 0 146 684
- US-A- 3 249 013
- US-A- 5 117 876
- US-A- 5 404 923

## Description

L'invention concerne un dispositif d'avitaillement de propulseurs, notamment de propulseurs cryogéniques, d'un lanceur permettant d'effectuer la séparation de la tuyauterie de remplissage lors du décollage du lanceur.

Un tel dispositif d'avitaillement permet de remplir en ergols les propulseurs cryogéniques et ceci jusqu'au moment du décollage. Cette contrainte entraîne un certain nombre de difficultés techniques puisque la rupture de la canalisation reliant le sol au lanceur doit être effective au moment du lancement, et ceci sans modifier la trajectoire du lanceur ou bien interférer avec les équipements restant au sol ou embarqués sur l'étage cryogénique ou d'autres étages du lanceur.

Habituellement, on utilise des bras cryogéniques équipés de plaques à clapets. Ces plaques à clapets de liaison bord/sol permettent les diverses opérations de remplissage et de pressurisation nécessaires pour les contrôles et préparations au lancement. Il s'agit d'une plaque bord et d'une plaque sol équipées de vannes ou clapets permettant de fermer les circuits hydrauliques et pneumatiques bord et sol (remplissage et purge/dégazage).

Ces plaques indépendantes sont mécaniquement liées en phase de production et montées ensemble sur lanceur en phase d'intégration. Elles sont mécaniquement et définitivement désolidarisées lors de la chronologie finale de lancement qui intervient peu de temps avant le contrôle de fonctionnement conduisant potentiellement à un tir avorté.

Ce déverrouillage entre les plaques sol et bord est effectué grâce à des vérins de déverrouillage qui comportent deux parties rendues mobiles entre elles lors de la mise sous pression du vérin. Ces parties étant respectivement fixées aux plaques sol et bord, ces dernières s'écartent l'une de l'autre lors de la mise sous pression des vérins de déverrouillage. Ensuite, du fait du poids des plaques et des flexibles qui leur sont attachés et de la traction exercée lors de l'élévation du lanceur par un câble d'extraction dédié, les plaques sol et bord pivotent autour de l'axe d'une charnière qui les relient, jusqu'au dégondage de cette dernière, ce qui conduit à la séparation des plaques sol et bord.

Ainsi, lors d'un tir avorté correspondant à un dysfonctionnement des moteurs alors même que le lanceur ne s'est pas élevé, il se produit une séparation irréversible de la liaison bord/sol puis le largage des canalisations sol.

En conséquence, avec un tel équipement, puisqu'aucune reconnexion n'est possible, il n'est plus possible de faire une vidange normale du lanceur et il est nécessaire de changer la liaison bord/sol dès que le tir est avorté.

Un tel changement de la liaison bord/sol inclut le remplacement des plaques à clapet et s'accompagne d'une reconfiguration complète des circuits d'ergols incluant une vidange, ce qui prend énormément de temps (environ une semaine).

En outre, l'opération de dégagement des bras cryogéniques lors du lancement est délicate : si le bras est rétracté un peu trop tard, sans pour autant déséquilibrer le lanceur, il existe un risque d'endommagement du dispositif de remplissage à la fois au niveau des installations au sol et au niveau des installations embarquées sur le lanceur.

Le document US 5 404 923 concerne un appareil pour l'avitaillement automatique d'un lanceur.

Le document EP 0 146 684 se rapporte à une connexion de tuyaux par une différence de pression négative entre une enceinte et l'extérieur.

Le document US 3 249 013 porte sur un dispositif d'avitaillement de propulseurs d'un lanceur selon le préambule de la revendication 1.

La présente invention a pour objectif de fournir un dispositif d'avitaillement de propulseurs d'un lanceur permettant de surmonter les inconvénients de l'art antérieur et en particulier offrant la possibilité de reconnexion en cas de tir avorté.

A cet effet, selon la présente invention, le dispositif d'avitaillement est caractérisé en ce que le module sol comporte en outre une vanne sol reliée au canal sol, en aval de ce dernier, et au passage sol, et en ce que le système de couplage hydraulique entre le module bord et le module sol comporte en outre une première enceinte annulaire située entre la plaque bord et la plaque sol, autour du système de couplage hydraulique et dont la mise en dépression permet à la plaque bord et à la plaque sol d'être maintenues dans une position connectée.

De cette manière, on comprend que par la présence de la première enceinte annulaire, il est possible de conserver le couplage hydraulique entre le module bord et le module sol, tant que la dépression est maintenue.

Ainsi, en maintenant cette dépression dans la première enceinte annulaire jusqu'au moment de l'élévation du lanceur, on conserve la connexion entre le module bord et le module sol même dans le cas d'un tir avorté.

Cette solution présente aussi l'avantage supplémentaire, de permettre, en outre de maintenir la connexion entre le module bord et le module sol par des moyens extrêmement simples et fiables.

Globalement, grâce à la solution selon la présente invention, il est possible d'éviter, en cas de tir avorté, d'avoir à remplacer et/ou à remonter tout ou partie du système de couplage reliant le module bord et le module sol, ce qui représente une économie très significative en temps, en matériel et en main d'oeuvre.

D'autres avantages et caractéristiques de l'invention ressortiront à la lecture de la description suivante faite à titre d'exemple et en référence aux dessins annexés dans lesquels :
- les figures 1 à 3 sont des vues schématiques en coupe longitudinale représentant le principe du dispositif d'avitaillement selon l'invention au cours de trois phases successives,
- les figures 1A à 3A sont des vues analogues à celles des figures 1 à 3 pour une alternative de réalisation,
- la figure 1B est une vue analogue à celle de la figure 1 pour une autre alternative de réalisation,
- la figure 4 est une vue générale en perspective depuis le côté d'un mode de réalisation du dispositif d'avitaillement selon l'invention,
- la figure 5 est une vue en perspective depuis le dessus du dispositif d'avitaillement de la figure 4, avec éclatement d'une partie des pièces,
- la figure 6 est une vue en section selon un plan horizontal du dispositif d'avitaillement depuis la direction VI de la figure 4,
- la figure 7 est une vue en section selon un plan vertical transversal du dispositif d'avitaillement depuis la direction VII de la figure 4, au niveau de la plaque sol,
- la figure 8 est une vue en section selon un plan vertical transversal du dispositif d'avitaillement depuis la direction VIII de la figure 4, au niveau de la plaque bord, et
- la figure 9 est une vue en section selon un plan vertical axial du dispositif d'avitaillement depuis la direction IX de la figure 4, à l'avant d'un doigt de verrouillage.

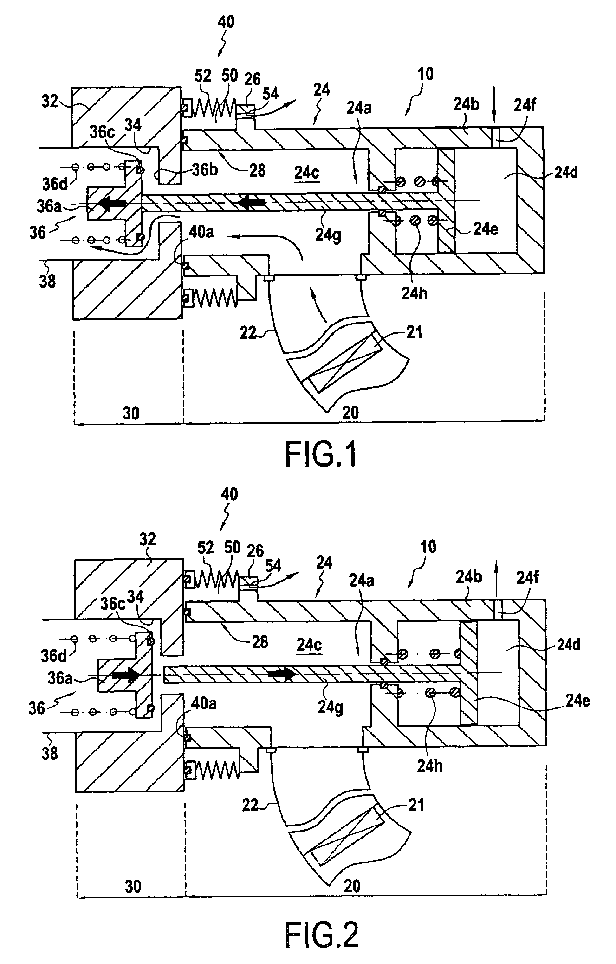

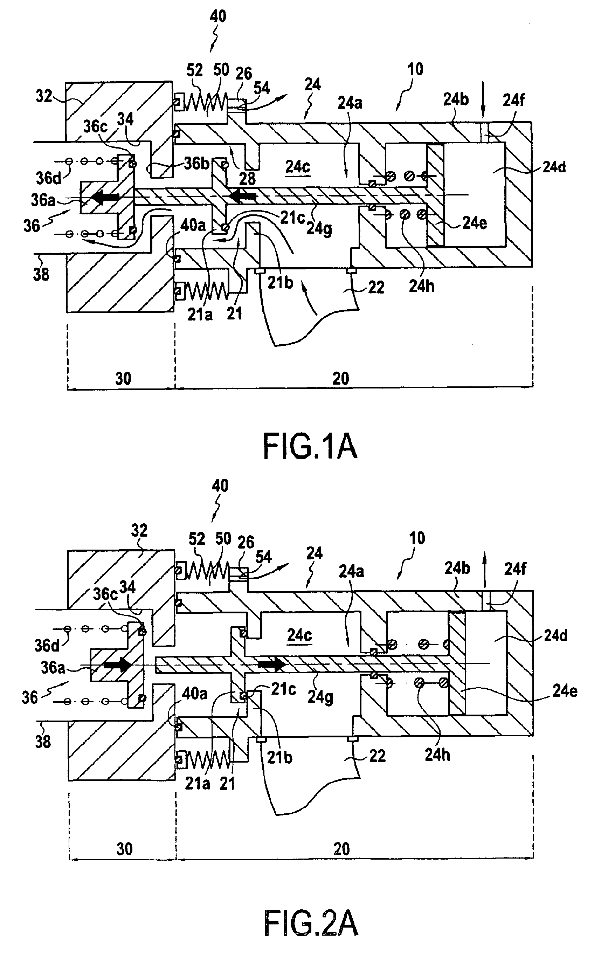

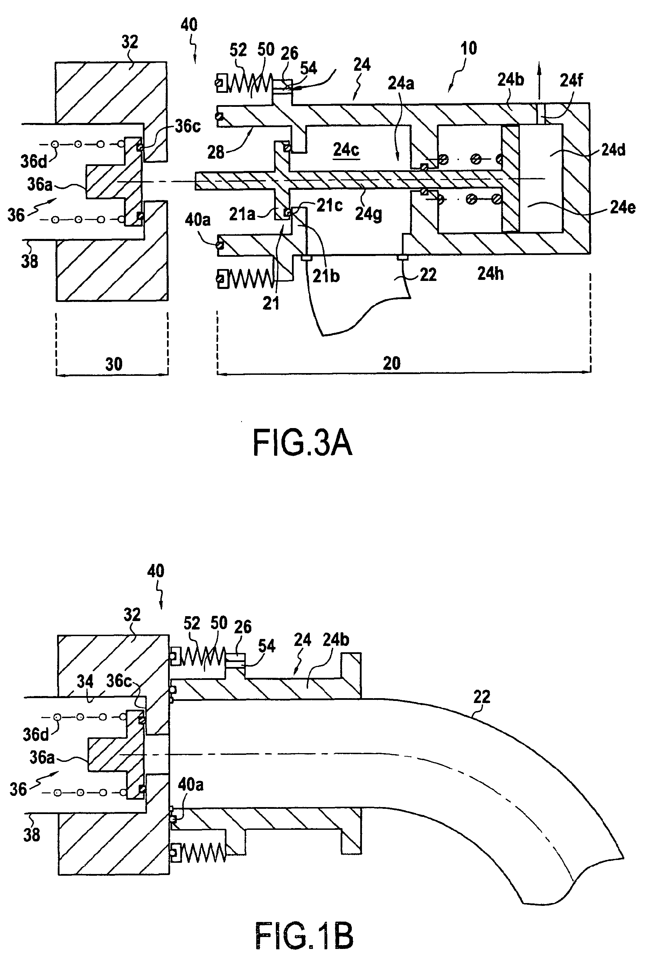

On se reporte en premier lieu aux figures 1 à 3 illustrant de façon schématique le principe de l'invention avec un dispositif d'avitaillement 10 comportant un module sol 20, à droite sur les figures, et un module bord 30, à gauche sur les figures.

Sur la figure 1, les modules sol 20 et bord 30 sont en position connectée l'un à l'autre et le circuit d'avitaillement est ouvert pour permettre l'alimentation en fluide des réservoirs.

Le module sol 20 comporte, d'amont en aval suivant le sens des flèches représentant l'écoulement du fluide d'avitaillement, une vanne sol 21 logée ou débouchant dans un canal sol 22 placé en amont d'une source de fluide d'avitaillement (non représentée), une commande sol 24 et une plaque sol 26 comportant un passage sol 28 en direction du module bord 30.

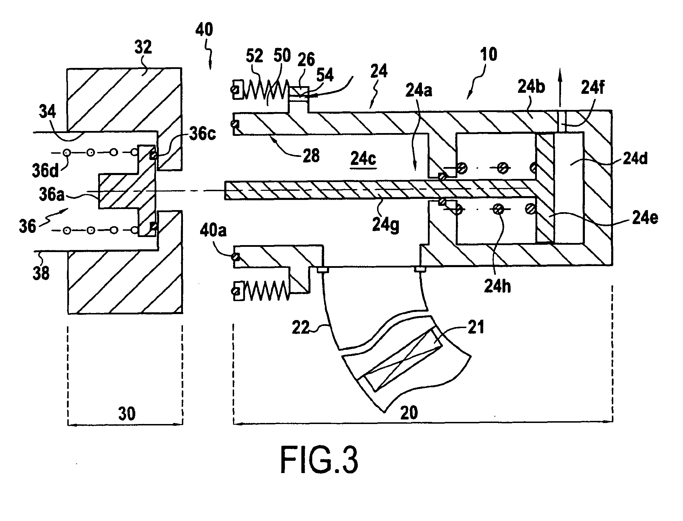

La commande sol 24 est représentée sous la forme d'un vérin avec un piston 24a mobile en coulissement dans un cylindre 24b délimitant deux chambres : une chambre avant 24c raccordée au canal sol 22 et une chambre arrière 24d dans laquelle la tête de piston 24e est logée. Une ouverture 24f dans la chambre arrière 24d permet l'entrée dans cette dernière d'un gaz sous pression, ce qui permet l'avancée de la tête de piston 24e dans une position avant, entraînant la tige de piston 24g à gauche sur la figure 1, jusque dans le module bord 30, ce qui place en position ouverte une vanne bord 36 dont le clapet 36a est au préalable en position obturée. La chambre arrière 24d comporte également des moyens de rappel (ici un ressort hélicoïdal 24h) permettant le retour du piston 24a dans une position arrière ce qui correspond à une position fermée de la vanne bord 36 (Figures 2 et 3) lorsque la pression de gaz diminue dans la chambre arrière 24d.

La plaque sol 26 entoure la partie avant du cylindre 24b du piston 24a en délimitant le passage sol 28 dans le prolongement de la chambre avant 24c.

Le module bord 30 comporte, d'amont en aval suivant le sens des flèches représentant l'écoulement du fluide d'avitaillement (de droite à gauche sur les figures), une plaque bord 32 délimitant un passage 34 qui est, sur les figures 1 et 2, dans le prolongement du passage sol 28, la vanne bord 36 et un canal bord 38 relié aux réservoirs cryogéniques.

La vanne bord 36 est représentée sous la forme d'un clapet 36a ou d'une soupape apte à obturer le passage bord 34 dont une portion forme le siège 36b de la vanne bord 36, un joint torique 36c permet de parfaire l'étanchéité entre le clapet 36a et le siège 36b lorsque la vanne bord 36 est en position de fermeture (Figure 3).

Comme on le voit sur la figure 1, lorsque le piston 24a est dans la position avant, l'extrémité de la tige de piston 24g pénètre dans le passage bord 34 et pousse la vanne bord 36 qui s'ouvre, ce par quoi le fluide situé dans la chambre avant 24c et provenant du canal sol 22 pénètre dans le passage bord 34, contourne la vanne bord 36 et s'écoule dans le canal bord 38.

Sur la figure 2, du fait d'une baisse de pression dans la chambre arrière 24d (évacuation des gaz par l'ouverture 24f) et de l'action de rappel du ressort hélicoïdal 24h, la tête de piston 24e et la tige de piston 24g retournent en position arrière, ce qui permet la fermeture de la vanne bord 36 qui est illustrée dans sa position fermée sur la figure 3.

Des moyens de rappel (ici un ressort hélicoïdal 36d) permettent le retour de la vanne bord 36 en position fermée dans laquelle le passage bord 34 n'est plus en communication de fluide avec le passage sol 28 (figure 3).

Dans ce cas, la commande en ouverture /fermeture de la vanne sol 21 est indépendante de la commande en ouverture /fermeture de la vanne bord 36.

Si l'on se reporte aux figures 1A à 1C, cette variante de réalisation prévoit comme différence par rapport aux figures 1 à 3, le fait que la vanne sol 21 est logée dans la chambre avant 24c et est commandée également par la commande sol 24. En effet, la vanne sol 21 comporte un clapet annulaire 21a monté de façon solidaire autour de la tige de piston 24g et un siège annulaire 21b monté sur la face interne de la paroi du cylindre 24b, à l'arrière du clapet 21a. Un joint torique 21c permet de parfaire l'étanchéité entre le clapet 21a et le siège 21b lorsque la vanne sol 21 est en position de fermeture (Figures 2A et 3A).

Le mouvement de la tige de piston 24g vers l'avant (sur la gauche des figures 1A à 3A) permet, en déplaçant vers l'avant à la fois le clapet 36a de la vanne bord 36 et le clapet 21a de la vanne sol 21, d'ouvrir simultanément la vanne bord 36 et la vanne sol 21.

Inversement, le déplacement vers l'arrière de la tige de piston 24g permet à la commande sol 24 de fermer simultanément la vanne bord 36 et la vanne sol 21 (figures 2A et 3A).

Ainsi, dans ce cas, on comprend que la commande en ouverture de la vanne sol 21 entraîne la commande en ouverture de la vanne bord 36, et la commande en fermeture de la vanne sol 21 entraîne la commande en fermeture de la vanne bord 36.

En inversant la position de la tête de piston 24e et du clapet 36a, on peut prévoir que la commande en ouverture de la vanne bord 36 entraîne la commande en ouverture de la vanne sol 21, et la commande en fermeture de la vanne bord 36 entraîne la commande en fermeture de la vanne sol 21.

Selon des alternatives de réalisation non représentées, au lieu de commander le mouvement de la tige de piston 24g de façon pneumatique, il est bien entendu possible d'utiliser d'autres types de commandes telles que des commandes électriques.

Par ailleurs, on a représenté sur les figures 1 et 1A le cas où l'ouverture 24f débouche dans la partie arrière de la chambre arrière 24d tandis que le ressort hélicoïdal 24h prend appui sur la tête de piston 24e en étant logé dans la partie avant de la chambre arrière 24d, mais on peut inverser cet agencement (ouverture 24f qui débouche dans la partie avant de la chambre arrière 24d et ressort hélicoïdal 24h logé dans la partie arrière de la chambre arrière 24d). On peut également utiliser deux ouvertures qui débouchent respectivement dans la partie avant et dans la partie arrière de la chambre arrière 24d et qui sont aptes à délivrer des gaz sous des pressions différentes, ce par quoi on peut faire avancer ou reculer la tête de piston 24e et la tige de piston 24g.

Selon une autre alternative de réalisation illustrée sur la figure 1B, une solution techniquement plus simple est prévue : la commande sol 24 est réduite au cylindre 24b délimitant une chambre unique, sans piston, connectée au canal sol 22. Dans ce cas, c'est la pression du fluide pénétrant par le canal sol qui permet de déplacer le clapet 36a et d'ouvrir la vanne bord 36. La vanne sol (non représentée) est située en amont du système de couplage hydraulique 40. En variante, on peut également prévoir (cas de figure non représenté) que la vanne bord 36 est placée plus en aval du système de couplage hydraulique 40 : ainsi les vannes sol 21 et bord 36 disposent chacune de leur propre commande.

Le module sol 20 et le module bord 30 sont relié l'un à l'autre par un système de couplage hydraulique 40 qui comprend un joint annulaire 40a permettant une étanchéité entre le module sol 20 et le module bord 30 (entre la plaque bord 32 et la plaque sol 26).

Selon une caractéristique essentielle de l'invention, une première enceinte annulaire 50, apte à être mise en dépression, entoure le système de couplage hydraulique 40.

Comme il apparaît sur la figure 1, cette première enceinte annulaire 50 s'étend entre la plaque sol 26 et la plaque bord 32 (respectivement à droite et à gauche sur les figures 1 à 3).

La première enceinte annulaire 50 est délimitée en direction radiale externe par un premier soufflet annulaire 52 entourant le système de couplage hydraulique 40 et dont les extrémités prennent appui de façon étanche sur la plaque bord 32 et sur la plaque sol 26.

Afin de permettre la mise en dépression de la première enceinte 50, la plaque sol comporte une ouverture 54 débouchant dans ladite première enceinte 50 et apte à être reliée à des moyens de mise en dépression (non représentés).

Ainsi, tant que la première enceinte 50 est en dépression, c'est-à-dire à une valeur de pression en deçà de la pression atmosphérique (par exemple à des valeurs de pression comprises entre 0,5 bar et 0,7 bar, on maintient la plaque sol 26 et la plaque bord 32 connectées, par « effet ventouse », ce qui permet de maintenir connectés entre eux le module sol 20 et le module bord 30 (voir figures 1 et 2, 1A et 1B, et 1C).

Sur les figures 3 et 3A, la pression de gaz a été augmentée dans la première enceinte annulaire 50, par injection de gaz par l'ouverture 54, de sorte que les modules sol 20 et bord 30 sont alors déconnectés et deviennent séparables entre eux, par exemple lors de l'élévation du lanceur. Cette augmentation de la pression de gaz dans la première enceinte annulaire 50 peut être une mise à la pression atmosphérique ou une mise en surpression (pression supérieure à la pression atmosphérique).

Ainsi, on comprend que grâce à l'invention, on peut très simplement, par une simple différence de pression négative entre la première enceinte annulaire 50 et l'extérieur, maintenir une connexion entre les modules sol 20 et bord 30, cette connexion étant ouverte par variation de la pression dans la première enceinte annulaire 50 (mise à la pression atmosphérique ou à une pression supérieure).

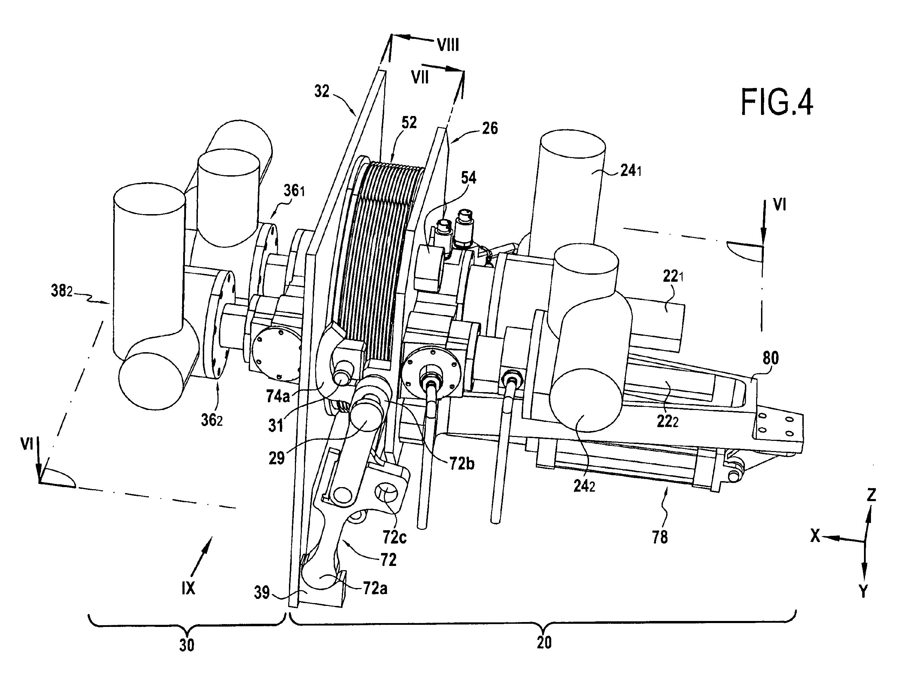

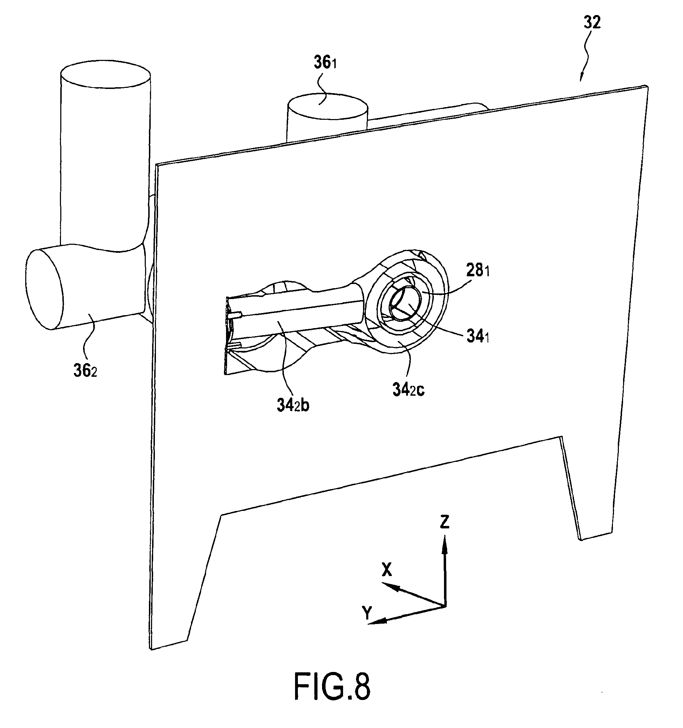

On se reporte maintenant aux figures 4 à 9 qui représentent plus précisément un mode de réalisation du dispositif d'avitaillement 10. Dans la suite du texte, les signes de références déjà utilisés précédemment sont repris pour désigner les parties du dispositif d'avitaillement déjà citées.

Ce mode de réalisation comporte deux veines parallèles d'alimentation ou de vidange en fluide, permettant par exemple de réaliser simultanément le remplissage des réservoirs cryogéniques avec des ergols différents (nature chimique et/ou état physique différent), notamment un ergol liquide et un ergol gazeux, par exemple d'un côté de l'oxygène liquide et en parallèle de l'oxygène gazeux.

A cet effet (voir les figures 4 à 6) :
- le module sol 20 comporte un premier canal sol 22₁ destiné à être relié, en amont (à droite sur les figures), à une première source de fluide, une première vanne sol 24₁ reliée au premier canal sol 22₁ en aval de ce dernier, un deuxième canal sol 22₂ destiné à être relié, en amont, à une deuxième source de fluide et une deuxième vanne sol 24₂ reliée au deuxième canal sol 22₂ en aval de ce dernier, la plaque sol 26 étant équipée d'un premier passage sol 28₁ relié à ladite première vanne sol 24₁ et d'un deuxième passage sol 28₂ relié à la deuxième vanne sol 24₂,
- le module bord 30 comporte un premier canal bord 38₁ destiné à être relié, en aval, à un premier réservoir, une première vanne bord 36₁ reliée au premier canal bord 38₁ en amont de ce dernier, un deuxième canal bord 38₂ destiné à être relié, en aval, à un deuxième réservoir et une deuxième vanne bord 36₂ reliée au deuxième canal bord 38₂ en amont de ce dernier, la plaque bord 32 étant équipée d'un premier passage bord 34₁ relié à ladite première vanne bord 36₁ et d'un deuxième passage bord 34₂ relié à la deuxième vanne bord 36₂,
- le système de couplage hydraulique 40 permet la mise en communication de fluide d'une part entre le premier passage sol 28₁ et le premier passage bord 34₁ et d'autre part entre le deuxième passage sol 28₂ et le deuxième passage bord 34₂.

De façon plus précise, dans ce mode de réalisation représenté, les deux veines parallèles d'alimentation en fluide sont coaxiales. A cet effet, le premier passage sol 28₁ et le deuxième passage sol 28₂ d'une part et le premier passage bord 34₁ et le deuxième passage bord 34₂ d'autre part sont coaxiaux l'un par rapport à l'autre sur au moins un tronçon desdits passages 28₁, 28₂, 34₁, 34₂.

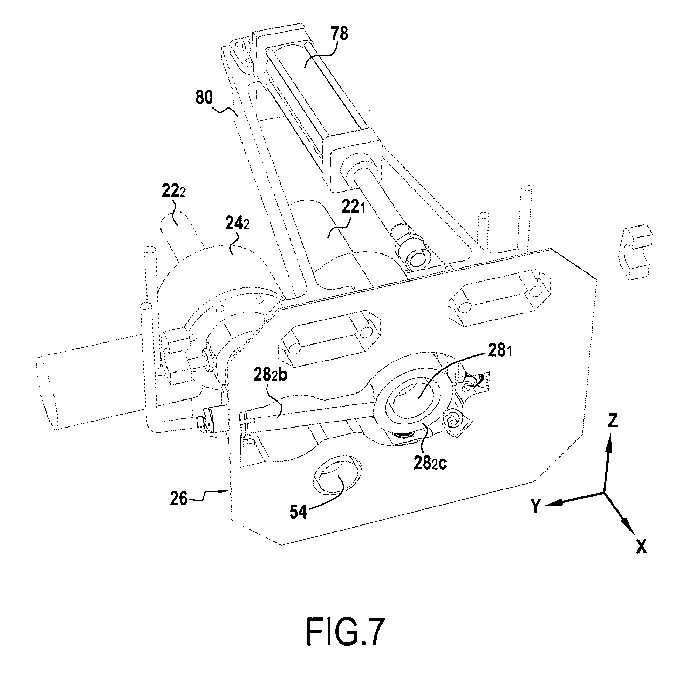

A cet égard, du côté du module sol 20 (voir les figures 4, 6 et 7), le premier ensemble sol formé par le premier canal sol 22₁ et la première vanne sol 24₁ est situé parallèlement à côté du deuxième ensemble sol formé par le deuxième canal sol 22₂ et la deuxième vanne sol 24₂. Ce premier ensemble sol est monté sur la plaque sol 26 à un premier emplacement formant l'ouverture du premier passage sol 28₁ qui est rectiligne jusqu'à sa sortie. Ce deuxième ensemble sol est monté sur la plaque sol 26 à un deuxième emplacement formant l'ouverture du deuxième passage sol 28₂ qui présente, successivement dans le prolongement l'une de l'autre, une première portion 28₂a rectiligne parallèle à l'axe X et au deuxième canal sol 22₂, une deuxième portion 28₂b rectiligne sensiblement parallèle à l'axe Y qui s'étend à angle presque droit depuis la première portion 28₂a en direction du premier passage sol 28₁ et une troisième portion 28₂c annulaire qui s'étend jusqu'à la sortie du deuxième passage sol 28₂ et qui entoure la portion aval du premier passage sol 28₁ (voir la figure 7).

Du côté du module bord 30 (voir les figures 4, 6 et 8), le premier ensemble bord formé par le premier canal bord 38₁ et la première vanne bord 36₁ est situé parallèlement à côté du deuxième ensemble bord formé par le deuxième canal bord 38₂ et la deuxième vanne bord 36₂. Ce premier ensemble bord est monté sur la plaque bord 32 à un premier emplacement formant l'ouverture du premier passage bord 34₁ qui est rectiligne jusqu'à sa sortie. Ce deuxième ensemble bord est monté sur la plaque bord 32 à un deuxième emplacement formant l'ouverture du deuxième passage bord 34₂ qui présente, successivement dans le prolongement l'une de l'autre, une première portion 34₂a rectiligne parallèle à l'axe X et au deuxième canal bord 38₂, une deuxième portion 34₂b rectiligne sensiblement parallèle à l'axe Y qui s'étend à angle presque droit depuis la première portion 34₂a en direction du premier passage bord 34₁ et une troisième portion 34₂c annulaire qui s'étend jusqu'à la sortie du deuxième passage bord 34₂ et qui entoure la portion aval du premier passage bord 34₁ (voir la figure 7).

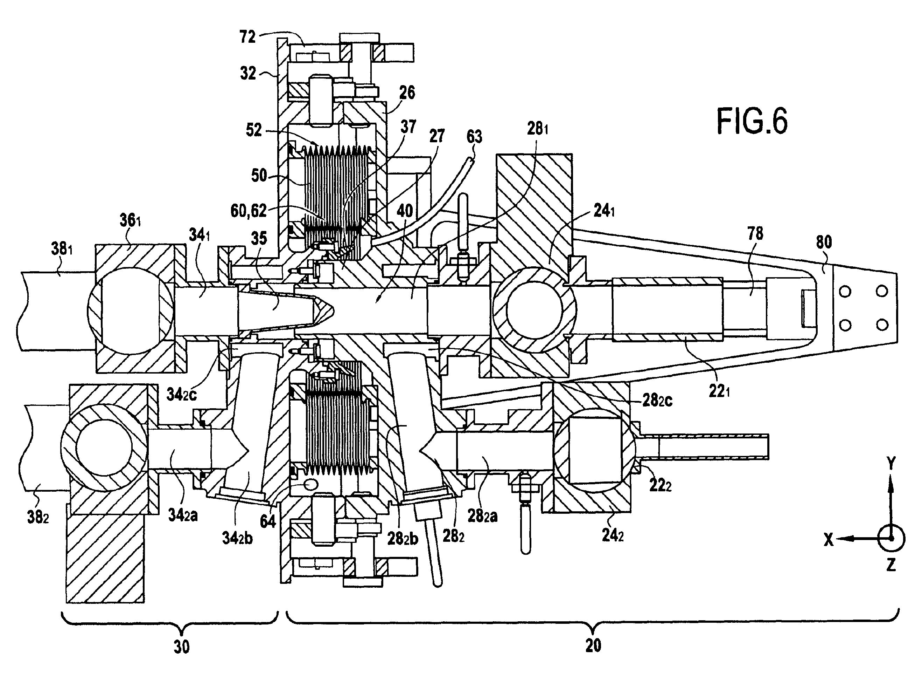

De cette façon, comme on peut le voir sur la figure 6, dans la position connectée entre le module sol 20 et le module bord 30, on trouve alignés parallèlement à l'axe X, de droite à gauche :
- d'une part, le premier canal sol 22₁, le premier passage sol 28₁ (entouré en partie par la troisième portion 28₂c annulaire du deuxième passage sol 28₂), le premier passage bord 34₁ (entouré en partie par la troisième portion 34₂c annulaire du deuxième passage bord 34₂) et le premier canal bord 38₁ qui sont en communication de fluide pour permettre le passage du premier fluide d'avitaillement depuis d'une source placée au sol vers le réservoir sur le lanceur, et
- d'autre part la troisième portion 28₂c annulaire du deuxième passage sol 28₂ et la troisième portion 34₂c annulaire du deuxième passage bord 34₂ qui sont en communication de fluide dans le prolongement l'une de l'autre pour permettre le passage du deuxième fluide d'avitaillement de façon coaxiale et à l'extérieur par rapport à l'écoulement du premier fluide d'avitaillement.

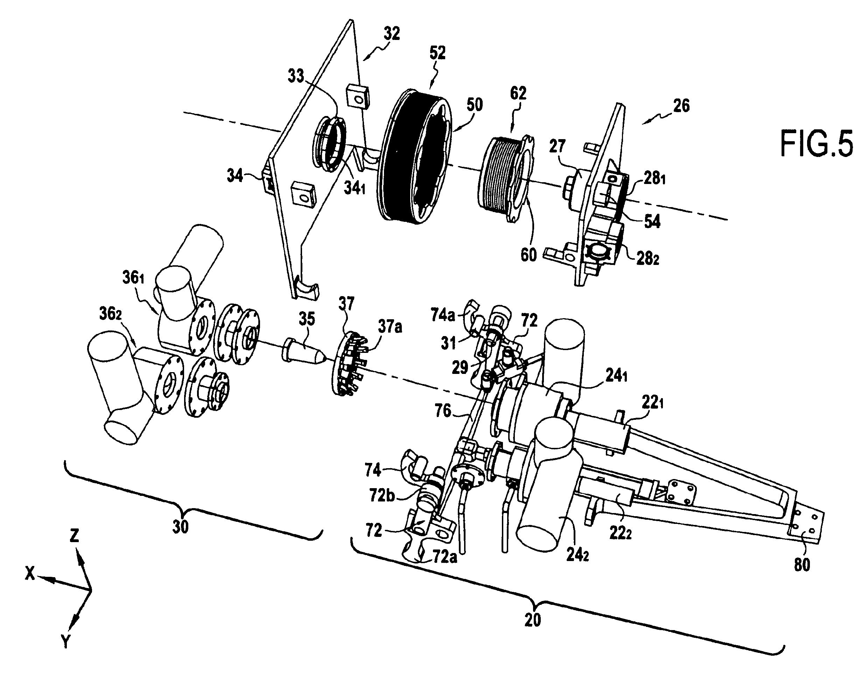

Sur les figures 5 et 6, un filtre 35 est disposé à l'intérieur du premier passage bord 34₁ qui est destiné plus particulièrement au passage d'un liquide, et ce afin d'éviter de polluer avec des particules la veine de fluide en aval du dispositif d'avitaillement 10.

Comme il apparaît sur la figure 6, les vannes (première vanne sol 24₁, deuxième vanne sol 24₂, première vanne bord 36₁ et deuxième vanne bord 36₂) sont des vannes à boisseau sphérique. On peut bien sûr envisager d'autres types de vannes telles que des vannes à clapet.

Le système de couplage hydraulique 40 va maintenant être décrit en relation avec les figures 5 et 6 : autour de l'entrée du premier passage bord 34₁ de la plaque bord 32, une collerette annulaire 33 filetée reçoit par vissage un couvercle annulaire centreur 37 dont l'extrémité libre 37a tournée en direction opposée à la plaque bord 32 est crénelée et évasée. Cette l'extrémité libre 37a permet de recevoir, en l'entourant, une partie annulaire en saillie 27 formée sur la face de la plaque sol 26 tournée vers le module bord 30, cette partie annulaire en saillie 27 entourant la portion aval du premier passage sol 28₁.

Le système de couplage hydraulique 40 comporte donc essentiellement la collerette annulaire 33 de la plaque bord 32, le couvercle annulaire centreur 37 et la partie annulaire en saillie 27 de la plaque sol 26.

Pour parfaire l'étanchéité, les faces annulaires extérieures de la collerette annulaire 33 et du couvercle annulaire centreur 37 sont munies d'un joint annulaire.

Une première enceinte annulaire 50 délimitée radialement à l'extérieur par le premier soufflet annulaire 52 (voir les figures 4 à 6) entoure le système de couplage hydraulique 40. L'ouverture 54 de la plaque sol est dans le prolongement axial (selon l'axe des X) de la première enceinte annulaire 50 et permet, par liaison avec des moyens de mise en dépression (par exemple une pompe) de placer en dépression la première enceinte annulaire 50. Dans cette situation, les parois d'extrémité du premier soufflet annulaire 52 qui sont recouvertes d'un joint annulaire sont « collées » aux faces en regard des plaques sol 26 et bord 32, ce qui créé une liaison de type ventouse.

Le dispositif d'avitaillement 10 des figures 5 à 9 comprend en outre une deuxième enceinte annulaire 60 apte à être mise en surpression, située entre la plaque bord 32 et la plaque sol 26, autour du système de couplage hydraulique 40 et autour de laquelle se trouve la première enceinte annulaire 50.

Cette deuxième enceinte annulaire 60 est délimitée radialement à l'extérieur par un deuxième soufflet annulaire 62 (voir les figures 4 à 6) qui entoure le système de couplage hydraulique 40 et qui est entouré par le premier soufflet annulaire 52. La deuxième enceinte annulaire 60 est mise en surpression par une alimentation dédiée (conduit 63 sur la figure 6) qui permet l'introduction d'un gaz neutre en surpression par une ouverture de la plaque sol 26 : ainsi, on évite que des produits dangereux ne puissent pénétrer dans la zone en dépression.

Le maintien en surpression de la deuxième enceinte annulaire 60 ne compromet pas le maintien en position connectée entre le module sol 20 et le module bord 30 car la première enceinte annulaire 50 est à l'extérieur de la deuxième enceinte annulaire 60 et présente une dimension suffisante pour que la dépression à l'intérieur de la première enceinte annulaire maintienne le couplage entre le module bord 30 et le module sol 20.

La surpression de la deuxième enceinte annulaire 60 permet, si cela est nécessaire, de conditionner le système de couplage hydraulique 40, à savoir en y ajoutant un système anti-givre sous la forme d'un balayage d'un gaz (air sec ou azote) externe au premier soufflet 52 (conduit 64 sur la figure 6) permettant d'éviter la formation de glace, notamment dans la zone de contact entre le premier soufflet 52 et la plaque bord 32.

Le dispositif d'avitaillement 10 des figures 5 à 9 comprend en outre, entre la plaque bord 32 et la plaque sol 26, un système de verrouillage mécanique 70 apte à s'ouvrir lors de ou avant l'élévation du lanceur.

A cet effet, le système de verrouillage mécanique 70 comporte, de part et d'autre de la première enceinte annulaire 50, une fourchette de largage 72 dont une extrémité inférieure 72a prend appui sur la plaque bord 32 en position connectée, au niveau d'une portion de réception 39 sur laquelle prend appui l'extrémité inférieure 72a par complémentarité de forme, tandis que l'extrémité supérieure 72b de la fourchette de largage 72 est montée à pivot autour d'un axe sol 29 solidaire de la plaque sol 26 de sorte qu'une rotation de la fourchette de largage 72 autour de l'axe sol 29 entraîne un écartement entre la plaque sol 26 et la plaque bord 32 ou bien un point de fissuration sur la structure sur laquelle est fixée la plaque bord 32 (jusqu'au moment où l'extrémité inférieure 72a sort de la portion de réception 39) et réciproquement.

Ainsi, inversement, un écartement entre la plaque sol 26 et la plaque bord 32 entraîne une rotation de la fourchette de largage 72 autour de l'axe sol 29 jusqu'au moment où l'extrémité inférieure 72a sort de la portion de réception 39 et ouvre le système de verrouillage mécanique 70. C'est ce qui se produit lorsque le lanceur s'élève et qui conduit à la séparation entre le module sol 20 et le module bord 30 : à ce moment il n'y a normalement plus de dépression dans la première enceinte annulaire 50 mais s'il advenait qu'une telle dépression perdure dans la première enceinte annulaire 50, cette dernière n'empêcherait pas, du fait des forces exercées lors de l'élévation du lanceur, la séparation entre le module sol 20 et le module bord 30.

Dans ce but, la fourchette de largage 72 est munie, entre son extrémité inférieure 72a et son extrémité supérieure 72b, d'un trou permettant d'attacher une élingue dont l'autre extrémité est fixée au sol. De cette façon, lors de l'élévation du lanceur, le module sol 20 est donc retenu et séparé du module bord qui est solidaire du lanceur.

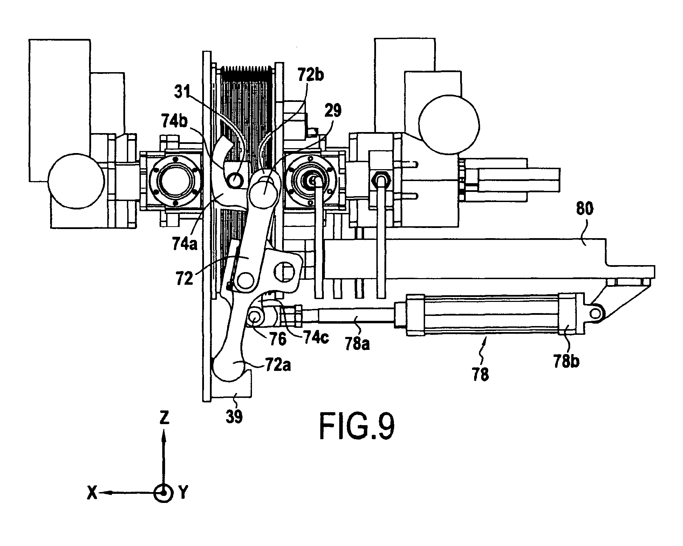

Le système de verrouillage mécanique 70 comporte en outre, de part et d'autre de la première enceinte annulaire 50, un doigt de verrouillage 74 (voir la figure 9) mobile en rotation autour de l'axe sol 29 entre une position ouverte (non représentée) qui ne retient pas entre elles la plaque sol 26 et la plaque bord 32 et une position fermée (figures 4 et 6) dans laquelle la plaque sol 26 et la plaque bord 32 sont retenues entre elles par le fait que le logement 74b délimité par l'extrémité supérieure 74a du doigt de verrouillage 74 reçoit un axe bord 31 solidaire de la plaque bord 32.

Le système de verrouillage mécanique 70 comporte en outre un arbre de liaison 76 reliant les extrémités inférieures 74c des doigts de verrouillage 74 et sur lequel est montée (avec articulation) l'extrémité libre de la tige 78a du piston d'un vérin de commande 78 permettant d'actionner l'ouverture ou la fermeture des doigts de verrouillage 74.

Le cylindre 78b du vérin de commande 78 est monté à l'arrière de la plaque sol 26 au moyen d'un support de vérin 80 en forme de V monté en équerre à l'arrière de la plaque sol 26.

Ainsi, en fonctionnement normal, la commande du vérin 78 libère les axes bord 31 hors des doigts de verrouillage 74 et permet ainsi la séparation entre le module sol 20 et le module bord 30 lors de l'élévation du lanceur.

## Revendications

1. Dispositif (10) d'avitaillement de propulseurs d'un lanceur, comprenant :
- un module sol (20) comportant au moins un canal sol (22) destiné à être relié, en amont à une source de fluide, et une plaque sol (26) équipée d'un passage sol (28),
- un module bord (30) comportant au moins un canal bord (38) destiné à être relié, en aval, aux réservoirs des propulseurs, une vanne bord (36) reliée au canal bord (38) en amont de ce dernier, et une plaque bord (32) équipée d'un passage bord (34) relié à ladite vanne bord (36),
- un système de couplage hydraulique (40) entre le module bord (30) et le module sol (20) permettant la mise en communication de fluide entre le passage sol (28) et le passage bord (34), **caractérisé en ce que** le module sol (20) comporte en outre une vanne sol (21) reliée au canal sol (22), en aval de ce dernier, et au passage sol (28), et **en ce qu'** une première enceinte (50) annulaire est située entre la plaque bord (32) et la plaque sol (26), autour du système de couplage hydraulique (40) et dont la mise en dépression permet à la plaque bord (32) et à la plaque sol (26) d'être maintenues dans une position connectée.

2. Dispositif d'avitaillement selon la revendication 1, **caractérisé en ce que** ladite première enceinte (50) est délimitée par un premier soufflet annulaire (52) entourant le système de couplage hydraulique (40) et dont les extrémités prennent appui sur la plaque bord (32) et sur la plaque sol (26).

3. Dispositif d'avitaillement selon l'une quelconque des revendications précédentes, **caractérisé en ce que** la plaque sol (26) comporte une ouverture (54) débouchant dans ladite première enceinte (50) et apte à être reliée à des moyens de mise en dépression.

4. Dispositif d'avitaillement selon l'une quelconque des revendications précédentes, **caractérisé en ce qu'**il comprend en outre une deuxième enceinte annulaire (60) apte à être mise en surpression, située entre la plaque bord (32) et la plaque sol (26), autour du système de couplage hydraulique (40) et autour de laquelle se trouve la première enceinte (50) annulaire.

5. Dispositif d'avitaillement selon l'une quelconque des revendications précédentes, **caractérisé en ce que** la commande en ouverture de la vanne sol (21) entraîne la commande en ouverture de la vanne bord (36), et la commande en fermeture de la vanne sol (21) entraîne la commande en fermeture de la vanne bord (36).

6. Dispositif d'avitaillement selon l'une quelconque des revendications précédentes, **caractérisé en ce que** la commande en ouverture de la vanne bord (36) entraîne la commande en ouverture de la vanne sol (21), et la commande en fermeture de la vanne bord (36) entraîne la commande en fermeture de la vanne sol (21).

7. Dispositif d'avitaillement selon l'une quelconque des revendications précédentes, **caractérisé en ce que** qu'il comprend en outre, entre la plaque bord (32) et la plaque sol (26), un système de verrouillage mécanique (70) apte à s'ouvrir lors de ou avant l'élévation du lanceur.

8. Dispositif d'avitaillement selon la revendication précédente, **caractérisé en ce que** le système de verrouillage mécanique comporte, de part et d'autre de la première enceinte (50) annulaire, une fourchette de largage (72) dont une extrémité inférieure (72a) prend appui sur la plaque bord (32) en position connectée tandis que l'extrémité supérieure (72b) de la fourchette de largage (72) est montée à pivot autour d'un axe sol (29) solidaire de la plaque sol (26) de sorte qu'une rotation de la fourchette de largage (72) autour de l'axe sol (29) entraîne un écartement entre la plaque sol (26) et la plaque bord (32) et réciproquement.

9. Dispositif d'avitaillement selon la revendication précédente, **caractérisé en ce que** le système de verrouillage mécanique comporte en outre, de part et d'autre de la première enceinte (50) annulaire, un doigt de verrouillage (74) mobile en rotation autour de l'axe sol (29) entre une position ouverte qui ne retient pas entre elles la plaque sol (26) et la plaque bord (32) et une position fermée dans laquelle la plaque sol (26) et la plaque bord (32) sont retenues entre elles par le fait que le logement (74b) délimité par l'extrémité supérieure (74a) du doigt de verrouillage (74) reçoit un axe bord (31) solidaire de la plaque bord (32).

10. Dispositif d'avitaillement selon la revendication précédente, **caractérisé en ce que** le système de verrouillage mécanique (70) comporte en outre un arbre de liaison (76) reliant les extrémités inférieures (74c) des doigts de verrouillage (74) et sur lequel est montée l'extrémité libre de la tige (78a) du piston d'un vérin de commande (78).

11. Dispositif d'avitaillement selon l'une quelconque des revendications précédentes, **caractérisé en ce que** :
- le module sol (20) comporte un premier canal sol (22₁) destiné à être relié, en amont, à une première source de fluide, une première vanne sol (24₁) reliée au premier canal sol (22₁) en aval de ce dernier, un deuxième canal sol (22₂) destiné à être relié, en amont, à une deuxième source de fluide et une deuxième vanne sol (24₂) reliée au deuxième canal sol (22₂) en aval de ce dernier, la plaque sol (26) étant équipée d'un premier passage sol (28₁) relié à ladite première vanne sol (24₁) et d'un deuxième passage sol (28₂) relié à la deuxième vanne sol (24₂),
- le module bord (30) comporte un premier canal bord (38₁) destiné à être relié, en aval, à un premier réservoir, une première vanne bord (36₁) reliée au premier canal bord (38₁) en amont de ce dernier, un deuxième canal bord (38₂) destiné à être relié, en aval, à un deuxième réservoir et une deuxième vanne bord (36₂) reliée au deuxième canal bord (38₂) en amont de ce dernier, la plaque bord (32) étant équipée d'un premier passage bord (34₁) relié à ladite première vanne bord (36₁) et d'un deuxième passage bord (34₂) relié à la deuxième vanne bord (36₂),
- le système de couplage hydraulique (40) permet la mise en communication de fluide d'une part entre le premier passage sol (28₁) et le premier passage bord (34₁) et d'autre part entre le deuxième passage sol (28₂) et le deuxième passage bord (34₂).

12. Dispositif d'avitaillement selon la revendication précédente, **caractérisé en ce que** le premier passage sol (28₁) et le deuxième passage sol (28₂) d'une part et le premier passage bord (34₁) et le deuxième passage bord (34₂) d'autre part sont coaxiaux l'un par rapport à l'autre sur au moins un tronçon desdits passages (28₁, 28₂, 34₁, 34₂).

## Patentansprüche

1. Vorrichtung (10) zum Betanken von Triebwerken einer Trägerrakete, umfassend:
- ein Bodenmodul (20), das wenigstens einen Bodenkanal (22), der dazu bestimmt ist, stromaufwärts mit einer Fluidquelle verbunden zu werden, und eine Bodenplatte (26), die mit einem Bodendurchgang (28) versehen ist, umfaßt,
- ein Bordmodul (30), das wenigstens einen Bordkanal (38), der dazu bestimmt ist, stromabwärts mit den Tanks der Triebwerke verbunden zu werden, ein Bordventil (36), das mit dem Bordkanal (38) stromaufwärts dessen verbunden ist, sowie eine Bordplatte (32), die mit einem mit dem Bordventil (36) verbundenen Borddurchgang (34) versehen ist, umfaßt,
- ein hydraulisches Kopplungssystem (40) zwischen dem Bordmodul (30) und dem Bodenmodul (20), das das Herstellen einer Fluidverbindung zwischen dem Bodendurchgang (28) und dem Borddurchgang (34) ermöglicht, **dadurch gekennzeichnet, daß** das Bodenmodul (20) ferner ein Bodenventil (21) umfaßt, das mit dem Bodenkanal (22) stromabwärts dessen und mit dem Bodendurchgang (28) verbunden ist, und daß zwischen der Bordplatte (32) und der Bodenplatte (26), um das hydraulische Kopplungssystem (40) herum ein erster ringförmiger Raum (50) gelegen ist, dessen Unterdruckbeaufschlagung der Bordplatte (32) und der Bodenplatte (26) ermöglicht, in einer verbundenen Position gehalten zu werden.

2. Betankungsvorrichtung nach Anspruch 1, **dadurch gekennzeichnet, daß** der erste Raum (50) durch einen ersten ringförmigen Balg (52) begrenzt ist, der das hydraulische Kopplungssystem (40) umgreift und dessen Enden sich an der Bordplatte (32) und an der Bodenplatte (26) abstützen.

3. Betankungsvorrichtung nach einem der vorhergehenden Ansprüche, **dadurch gekennzeichnet, daß** die Bodenplatte (26) eine Öffnung (54) umfaßt, die in den ersten Raum (50) mündet und die geeignet ist, mit Mitteln zur Unterdruckbeaufschlagung verbunden zu werden.

4. Betankungsvorrichtung nach einem der vorhergehenden Ansprüche, **dadurch gekennzeichnet, daß** sie ferner einen zweiten ringförmigen Raum (60) umfaßt, der geeignet ist, unter Überdruck gesetzt zu werden, der zwischen der Bordplatte (32) und der Bodenplatte (26), um das hydraulische Kopplungssystem (40) gelegen ist und um den herum sich der erste ringförmige Raum (50) befindet.

5. Betankungsvorrichtung nach einem der vorhergehenden Ansprüche, **dadurch gekennzeichnet, daß** die Öffnungsbetätigung des Bodenventils (21) die Öffnungsbetätigung des Bordventils (36) zur Folge hat und die Schließbetätigung des Bodenventils (21) die Schließbetätigung des Bordventils (36) zur Folge hat.

6. Betankungsvorrichtung nach einem der vorhergehenden Ansprüche, **dadurch gekennzeichnet, daß** die Öffnungsbetätigung des Bordventils (36) die Öffnungsbetätigung des Bodenventils (21) zur Folge hat und die Schließbetätigung des Bordventils (36) die Schließbetätigung des Bodenventils (21) zur Folge hat.

7. Betankungsvorrichtung nach einem der vorhergehenden Ansprüche, **dadurch gekennzeichnet, daß** sie ferner zwischen der Bordplatte (32) und der Bodenplatte (26) ein mechanisches Verriegelungssystem (70) umfaßt, das geeignet ist, sich beim oder vor dem Aufsteigen der Trägerrakete zu öffnen.

8. Betankungsvorrichtung nach dem vorhergehenden Anspruch, **dadurch gekennzeichnet, daß** das mechanische Verriegelungssystem auf beiden Seiten des ersten ringförmigen Raums (50) eine Trenngabel (72) umfaßt, von der ein unteres Ende (72a) sich in verbundener Position an der Bordplatte (32) abstützt, während das obere Ende (72b) der Trenngabel (72) um eine Bodenachse (29), die mit der Bodenplatte (26) fest verbunden ist, drehbar angebracht ist, so daß eine Rotation der Trenngabel (72) um die Bodenachse (29) ein Entfernen der Bodenplatte (26) von der Bordplatte (32) zur Folge hat und umgekehrt.

9. Betankungsvorrichtung nach dem vorhergehenden Anspruch, **dadurch gekennzeichnet, daß** das mechanische Verriegelungssystem ferner auf beiden Seiten des ersten ringförmigen Raums (50) einen Verriegelungsfinger (74) umfaßt, der zwischen einer geöffneten Stellung, die die Bodenplatte (26) und die Bordplatte (32) nicht untereinander festhält, und einer geschlossenen Stellung, in der die Bodenplatte (26) und die Bordplatte (32) dadurch untereinander festgehalten werden, daß die durch das obere Ende (74a) des Verriegelungsfingers (74) begrenzte Aufnahme (74b) eine mit der Bordplatte (32) fest verbundene Bordachse (31) aufnimmt, um die Bodenachse (29) drehbeweglich ist.

10. Betankungsvorrichtung nach dem vorhergehenden Anspruch, **dadurch gekennzeichnet, daß** das mechanische Verriegelungssystem (70) ferner eine Verbindungswelle (76) umfaßt, welche die unteren Enden (74c) der Verriegelungsfinger (74) verbindet und an der das freie Ende der Stange (78a) des Kolbens eines Betätigungszylinders (78) angebracht ist.

11. Betankungsvorrichtung nach einem der vorhergehenden Ansprüche, **dadurch gekennzeichnet, daß**:
- das Bodenmodul (20) einen ersten Bodenkanal (22₁), der dazu bestimmt ist, stromaufwärts mit einer ersten Fluidquelle verbunden zu werden, ein erstes Bodenventil (24₁), das mit dem ersten Bodenkanal (22₁) stromabwärts dessen verbunden ist, einen zweiten Bodenkanal (22₂), der dazu bestimmt ist, stromaufwärts mit einer zweiten Fluidquelle verbunden zu werden, sowie ein zweites Bodenventil (24₂), das mit dem zweiten Bodenkanal (22₂) stromabwärts dessen verbunden ist, umfaßt, wobei die Bodenplatte (26) mit einem ersten Bodendurchgang (28₁), der mit dem ersten Bodenventil (24₁) verbunden ist, und mit einem zweiten Bodendurchgang (28₂), der mit dem zweiten Bodenventil (24₂) verbunden ist, ausgestattet ist,
- das Bordmodul (30) einen ersten Bordkanal (38₁), der dazu bestimmt ist, stromabwärts mit einem ersten Tank verbunden zu werden, ein erstes Bordventil (36₁), das mit dem ersten Bordkanal (38₁) stromaufwärts dessen verbunden ist, einen zweiten Bordkanal (38₂), der dazu bestimmt ist, stromabwärts mit einem zweiten Tank verbunden zu werden, sowie ein zweites Bordventil (36₂), das mit dem zweiten Bordkanal (38₂) stromaufwärts dessen verbunden ist, umfaßt, wobei die Bordplatte (32) mit einem ersten Borddurchgang (34₁), der mit dem ersten Bordventil (36₁) verbunden ist, und mit einem zweiten Borddurchgang (34₂), der mit dem zweiten Bordventil (36₂) verbunden ist, ausgestattet ist,
- das hydraulische Kopplungssystem (40) das Herstellen einer Fluidverbindung einerseits zwischen dem ersten Bodendurchgang (28₁) und dem ersten Borddurchgang (34₁) sowie andererseits zwischen dem zweiten Bodendurchgang (28₂) und dem zweiten Borddurchgang (34₂) ermöglicht.

12. Betankungsvorrichtung nach dem vorhergehenden Anspruch, **dadurch gekennzeichnet, daß** der erste Bodendurchgang (28₁) und der zweite Bodendurchgang (28₂) einerseits sowie der erste Borddurchgang (34₁) und der zweite Borddurchgang (34₂) andererseits über wenigstens einen Abschnitt der Durchgänge (28₁, 28₂, 34₁, 34₂) koaxial zueinander sind.

## Claims

1. A fueling device (10) for fueling the thrusters of a launcher, the device comprising:
· a ground module (20) comprising at least: a ground pipe (22) for connection upstream to a source of fluid; and a ground plate (26) including a ground passage (28);
· an on-board module (30) comprising at least: an on-board pipe (38) for connecting downstream to the tanks of the thrusters; an on-board valve (36) connected upstream to the on-board pipe (38); and an on-board plate (32) including an on-board passage (34) connected to said on-board valve (36); and
· a hydraulic coupling system (40) between the on-board module (30) and the ground module (20) enabling fluid communication to be established between the ground passage (28) and the on-board passage (34), **characterized in that** the ground module comprises further a ground valve (21) connected downstream to the ground pipe (22); and to said ground valve (21), and **in that** a first annular enclosure (50) is situated between the on-board plate (32) and the ground plate (26) around the hydraulic coupling system (40) so that, when connected to suction, it enables the on-board plate (32) and the ground plate (26) to be held in a connected-together position.

2. A fueling device according to claim 1, **characterized in that** said first enclosure (50) is defined by a first annular bellows (52) surrounding the hydraulic coupling system (40) and having its ends bearing against the on-board plate (32) and the ground plate (26).

3. A fueling device according to any preceding claim, **characterized in that** the ground plate (26) includes an opening (54) leading into said first enclosure (50) and suitable for being connected to suction means.

4. A fueling device according to any preceding claim, **characterized in that** it further includes a second annular enclosure (60) suitable for being connected to high pressure, and situated between the on-board plate (32) and the ground plate (26) around the hydraulic coupling system (40) with the first annular enclosure (50) being situated around the second annular enclosure.

5. A fueling device according to any preceding claim, **characterized in that** a command to open the ground valve (21) gives rise to a command to open the on-board valve (36), and a command to close the ground valve (21) gives rise to a command to close the on-board valve (36).

6. A fueling device according to any preceding claim, **characterized in that** a command to open the on-board valve (36) gives rise to a command to open the ground valve (21), and a command to close the on-board valve (36) gives rise to a command to close the ground valve (21).

7. A fueling device according to any preceding claim, **characterized in that** it further includes, between the on-board plate (32) and the ground plate (26), a mechanical locking system (70) suitable for opening while the launcher is lifting off, or prior thereto.

8. A fueling device according to the preceding claim, **characterized in that** the mechanical locking system includes, on either side of the first annular enclosure (50), a release fork (72) having a bottom end (72a) bearing against the on-board plate (32) in the connected position while the top end (72b) of the release fork (72) is mounted to pivot about a ground pin (29) secured to the ground plate (26) in such a manner that pivoting of the release fork (72) about the ground pin (29) gives rise to the ground plate (26) and the on-board plate (32) being moved apart, and vice versa.

9. A fueling device according to the preceding claim, **characterized in that** the mechanical locking system further includes, on either side of the first annular enclosure (50), a locking finger (74) movable in pivoting about the ground pin (29) between an open position that does not hold together the ground plate (26) and the on-board plate (32), and a closed position in which the ground plate (26) and the on-board plate (32) are held together by the fact that the housing (74b) defined by the top end (74a) of the locking finger (74) receives an on-board pin (31) secured to the on-board plate (32).

10. A fueling device according to the preceding claim, **characterized in that** the mechanical locking system (70) further includes a connection shaft (76) connecting together the bottom ends (74c) of the locking fingers (74) and having the free end of the piston rod (78a) of the piston of a control actuator (78) mounted thereon.

11. A fueling device according to any preceding claim, **characterized in that**:
the ground module (20) includes a first ground pipe (22₁) for connecting upstream to a first fluid source, a first ground valve (24₁) connected downstream to the first ground pipe (22₁), a second ground pipe (22₂) for connecting upstream to a second fluid source, and a second ground valve (24₂) connected downstream to the second ground pipe (22₂), the ground plate (26) being provided with a first ground passage (28₁) connected to said first ground valve (24₁) and with a second ground passage (28₂) connected to the second ground valve (24₂);
the on-board module (30) includes a first on-board pipe (38₁) for connecting upstream to a first tank, a first on-board valve (36₁) connected upstream to the first on-board pipe (38₁), a second on-board pipe (38₂) for connecting upstream to a second tank, and a second on-board valve (36₂) connected upstream to the second on-board pipe (38₂), the on-board plate (32) being provided with a first on-board passage (34₁) connected to said first on-board valve (36₁) and with a second on-board passage (34₂) connected to the second on-board valve (36₂); and
· the hydraulic coupling system (40) serves to establish fluid communication firstly between the first ground passage (28₁) and the first on-board passage (34₁), and secondly between the second ground passage (28₂) and the second on-board passage (34₂).

12. A fueling device according to the preceding claim, **characterized in that** the first ground passage (28₁) and the second ground passage (28₂) are coaxial relative to each other, as are the first on-board passage (34₁) and the second on-board passage (34₂), over at least a segment of said passages (28₁, 28₂, 34₁, 34₂).
